# EUROPÄISCHE PATENTSCHRIFT

(11) **EP 1 227 274 B1**
(45) Veröffentlichungstag und Bekanntmachung des Hinweises auf die Patenterteilung: **21.12.2005**
(21) Anmeldenummer: 01101980.9
(22) Anmeldetag: 29.01.2001
(51) Int. Cl.: F16L 55/10

(54) **Druckdifferenzgesteuertes Erweitern des Querschnitts einer flexiblen Flüssigkeitsleitung**
Enlargement of the section of a flexible pipe by means of pressure
Elargissement de la section d'un tuyau flexible au moyen de pression

(43) Veröffentlichungstag der Anmeldung: 31.07.2002
(73) Patentinhaber: Ball Packaging Europe GmbH, 40880 Ratingen (DE)
(72) Erfinder: Ullmann, Bernd, 53121 Bonn (DE)
(74) Vertreter: Olgemöller, Luitgard Maria

(56) Entgegenhaltungen:
- EP-A- 0 799 627
- FR-A- 2 758 382
- GB-A- 2 241 986

## Beschreibung

Die vorliegende Erfindung betrifft eine Vorrichtung, die sich zum Aufweiten und ggf. auch zum Verengen des Querschnitts von Flüssigkeitsleitungen wie z.B. flexiblen Schläuchen eignet, wobei die hierfür erforderliche Kraft initial nicht durch mechanischen Druck ausgeübt wird

Absperrorgane für Flüssigkeitsleitungen sind in großer Zahl bekannt. Zum Absperren oder Verengen von Rohren werden üblicherweise Verschlußteile verwendet, die entweder in Strömungsrichtung (Ventile, Klappen) oder quer zur Strömungsrichtung (Hähne, Schieber) angeordnet sind.

Es ist auch bekannt, flexible Flüssigkeitsleitungen wie Schläuche in ihrem Durchmesser zu verengen oder wieder aufzuweiten, indem man außen mechanische Vorrichtungen wie Schlauchklemmen anbringt oder den Schlauch mechanisch gegen eine Unterlage drückt. Das Dokument FR-A- 2 758 382 zeigt eine solche Vorrichtung.

All diesen Lösungen ist gemeinsam, dass sie in der Regel den Querschnitt des Rohres oder Schlauches reversibel erweitern, verengen oder absperren, wobei es erforderlich ist, mechanische Einrichtungen vorzusehen, die entweder direkt mechanisch betätigt werden oder auf die über weitere mechanische Einrichtungen die erforderliche Kraft einwirkt, die die Querschnittsänderung im Rohr oder Schlauch bewirkt.

In bestimmten Fällen kann ein Bedürfnis bestehen, eine flexible Flüssigkeitsleitung aufzuweiten, deren Querschnitt - aus welchem Grund auch immer - an einer Stelle nicht das durch die Wandform vorgegebene Maximum einnimmt und die sich in einem Raum befindet, in dem kein unmittelbarer mechanischer Eingriff vorgenommen werden soll oder kann. Dies kann beispielsweise ein Raum oder Behälter sein, der gegenüber der Außenwelt abgeschlossen ist und unter Druck steht. Die vorliegende Erfindung stellt eine Vorrichtung bereit, mit der die Aufweitung der verengten Passage einer solchen Flüssigkeitsleitung, auch und vor allem bei einem völligem Verschluss der Leitung, möglich ist, wobei dieser Vorgang unter Umständen auch reversibel sein kann.

Die Aufgabe der Erfindung wird durch eine Vorrichtung nach Anspruch 1 und ein Verfahren nach Anspruch 9 gelöst.

**Figur 1** zeigt eine Ausgestaltung der erfindungsgemäßen Vorrichtung in der Aufsicht.

Die **Figuren 2 und 3** zeigen dieselbe Ausgestaltung von der Seite, und zwar einmal vor dem Aufweiten und einmal während des Aufweitens.

Die Erfindung stellt die mechanische Kraft, mit der die flexible Flüssigkeitsleitung aufgeweitet werden soll, initial dadurch bereit, dass in einem beliebigen gashaltigen Kompartiment, z.B. innerhalb eines unter Druck stehenden Containers, ein plötzlicher Druckabfall bewirkt wird. Das gashaltige Kompartiment (hier nachstehend auch als Gasreservoir bezeichnet) ist über eine offene Gasverbindung mit einem dehn- oder entfaltbaren Gassack verbunden. Die Länge und/oder der Durchmesser der offenen Gasverbindung ist/sind so gewählt, dass ein sehr schneller Gasaustausch zwischen Gasreservoir und Gassack nicht möglich ist. Fällt der Druck im Gasreservoir plötzlich ab, kann das im Gassack befindliche Gas daher nicht ebenso schnell in das Gasreservoir entweichen, um den Druck wieder auszugleichen, so dass sich der Gassack aufbläht. Die Volumenvergrößerung des Gassackes wird nun genutzt, um einen einarmigen Hebel gegenüber einer Unterlage aufzuspreizen. Die Flüssigkeitsleitung befindet sich währenddessen mit der aufzuweitenden Passage ebenfalls zwischen dem Hebel und der Unterlage; ihre Wand wird ggf. sowohl am Hebel als auch an der Unterlage fixiert, so dass sie beim Aufspreizen des Hebels auseinandergezogen oder -gedrückt und ihr Querschnitt in diesem Bereich vergrößert wird.

Die Erfindung ist auf jede beliebige Flüssigkeitsleitung anwendbar, die im aufzuweitenden Bereich so flexibel ist, dass sich ihre Außenwand verformen lässt. Das bedeutet, dass außerhalb des aufzuweitenden Bereichs keinerlei räumliche oder materialbezogene Beschränkungen bestehen. Die Erfindung kann beispielsweise auch für die Aufweitung einer Verbindung zwischen zwei völlig starren Kompartimenten verwendet werden, die eine beliebige Raumform besitzen können. Wenn die Flüssigkeitsleitung nachstehend häufig auch als "Schlauch" bezeichnet wird, so darf auch dieser Ausdruck demgegenüber nicht als Einschränkung verstanden werden. Die Flüssigkeitsleitung bzw. der Schlauch kann im aufzuweitenden Bereich völlig zusammengelegt oder -gedrückt sein, so dass ein Durchfluss völlig unmöglich, er also flüssigkeitsdicht ist; der Schlauch kann aber auch so deformiert sein, dass seine Querschnittsfläche gegenüber dem maximal möglichen Querschnitt nur verringert ist, beispielsweise durch Zusammendrücken oder -legen eines im Querschnitt maximal runden oder quadratischen Schlauchs oder eines Schlauchs, der aus zwei flexiblen, miteinander verbundenen Folienteilen hergestellt ist. Die im Querschnitt reduzierte Passage kann ihre Form ohne äußere Einwirkung einnehmen, sie kann aber auch zwischen dem Hebel und der Unterlage eingeklemmt sein, wenn der Hebel eine entsprechende Vorspannung aufweist. Die Form kann auch von innen fixiert sein, zum Beispiel durch Adhäsion der Wandteile, durch elektrostatische Aufladung, Haftreibung oder eine leicht lösbare Verklebung. Selbstverständlich sollte eine solche Fixierung nur leicht sein, da beim Aufspreizen des Hebels die entsprechende Haftkraft überwunden werden muss.

Der in der erfindungsgemäßen Vorrichtung eingesetzte Hebel ist ein einarmiger Hebel, der über einen Drehpunkt mit einer Unterlage verbunden ist. Der Ausdruck "Unterlage" soll nicht bedeuten, dass sich dieses Teil unterhalb des Hebels befindet, da die Vorrichtung nicht an eine bestimmte räumliche Fixierung gebunden ist. Unter "Unterlage" ist vielmehr jede Fläche oder jeder Gegenstand zu verstehen, die/der die Last, die der Hebel bei einem bestimmten Druck ausübt, aufnimmt. In einer bevorzugten Ausgestaltung hat die Unterlage die gleiche Gestalt wie der Hebel; diese beiden Teile nehmen dann zusammen mit dem Drehpunkt zusammen die Form einer Zange ein.

In Abhängigkeit von der Geometrie des aufzuweitenden Schlauchs und dessen Wandstärke (und damit den einzusetzenden Hebelkräften) kann die erfindungsgemäße Vorrichtung in ihrer Größe frei gestaltet werden. Wenn relativ kleine Dimensionen gewünscht sind, z.B. für dünne, hochflexible Schläuche mit Durchmessern im Millimeterbereich, wird die Hebellänge zweckmäßigerweise im Zentimeterbereich sein und kann z.B. 0,5 bis 20 cm betragen. Die Wahl der Breite des Hebels wird in Hinblick auf die Länge der verengten Passage getroffen werden, d.h. zweckmäßigerweise mindestens deren Länge aufweisen. Sie kann aber auch darüber hinausreichen, z.B. um die Last, die durch den sich ausdehnenden Gassack auf den Hebel einwirkt, relativ groß zu machen, wobei ein relativ großflächiger Gassack, der z.B. in aufgeweitetem Zustand die Form eines Zylinders annehmen kann, zwischen einer breiten Hebelfläche und einer entsprechenden Unterlage angeordnet wird.

Das Material kann ebenfalls dem vorgesehenen Zweck entsprechend frei gewählt werden. Wenn nur kleine Hebelkräfte erforderlich sind, kann der Hebel, ggf. zusammen mit Drehpunkt und Unterlage, unter anderem aus Kunststoff gefertigt sein, z.B. als Spritzgußteil. Der Drehpunkt kann je nach Gegebenheit als bewegliches Scharnier ausgestaltet sein; dies ist aber nicht in allen Fällen zwingend. In einer besonderen Ausgestaltung der Erfindung sind der Hebel und die Unterlage einstückig als zwei verbundene Arme aus leicht biegbarem Kunststoff hergestellt. Hierbei kann der theoretische Drehpunkt sogar starr sein, da die Last des sich ausdehnenden Gassacks die beiden Arme auseinanderdrückt. Wenn der Drehpunkt starr ist, besitzt der Hebel gegenüber der Unterlage eine Vorspannung, die dazu benutzt werden kann, die Flüssigkeitsleitung zusammenzudrücken oder in gefaltetem Zustand zu halten. Diese Aufgabe kann natürlich stattdessen auch oder zusätzlich von einer Feder oder dgl. übernommen werden.

Der Gassack befindet sich so zwischen dem Hebel und dessen Unterlage, dass die Flüssigkeitsleitung ebenfalls im Bereich zwischen Hebel und Unterlage angeordnet werden oder sein kann, wobei sich der Gassack entweder näher am Drehpunkt des Hebels befindet als der Schlauch oder umgekehrt. Aufgrund des Hebelgesetzes wird man den Gassack in der Regel weiter außen anordnen als den Schlauch, weil Gas eine große Ausdehnungsfähigkeit besitzt, eine starke Volumenvergrößerung des Gassackes in der Regel also leicht zu bewerkstelligen ist und außerdem auf diese Weise sichergestellt werden kann, dass sich im Ausgangszustand der Vorrichtung genügend Gas im Gassack befindet. Dagegen dürfte es häufig genügen, wenn der Schlauch um nur einen Bruchteil der Durchmesservergrößerung des Gassacks aufgeweitet wird, z.B. um wenige mm. Es sind aber durchaus auch Fälle denkbar, in denen die umgekehrte Anordnung Vorteile haben wird, z.B. wenn nur ein geringer Druckabfall im Gasreservoir bewerkstelligt werden kann und gleichzeitig ein sehr dünner oder nur wenig zusammengedrückter Schlauch auseinandergezogen werden soll, so dass die hierfür benötigte Kraft gering ist.

Als Gassack wird ein Behälter aus flexiblem Material bezeichnet, das entweder dehnbar sein muss oder in Falten gelegt werden kann. Das Material für diesen Sack kann je nach Bedarf beliebig gewählt werden und beispielsweise ein gasdichtes Kunststoffmaterial sein. Gegebenenfalls kann der Gassack auch als Spritzgußteil hergestellt werden. Er kann eine gleichbleibende oder unterschiedliche Wandstärke besitzen. In gut geeigneter Weise besitzt er vorgeformte Falten in Zieharmonika-Form, z.B. zusammen mit einem glatten Boden und einer glatten Decke. Statt dessen kann er z.B. auch eine Hülle besitzen, die nach dem Luftballon-Prinzip durch das sich ausdehnende Gas "aufgeblasen" wird. Wie bereits oben erwähnt, kann der Hebel der erfindungsgemäßen Vorrichtung breit sein, um einem relativ großen Gassack Platz zu bieten. Der Sack kann dann beispielsweise eine annähernd zylindrische, walzenähnliche oder eine quaderähnliche Form aufweisen.

Der Gassack ist gas- und flüssigkeitsdicht und ist nur über eine offene Gasverbindung mit einem Gasreservoir verbunden. Die Gasverbindung der vorliegenden Erfindung ist häufig ein starrer oder flexibler Schlauch oder ein Röhrchen oder dgl. mit einer Geometrie, die einen schnellen Gasaustausch zwischen Gassack und Umgebung verhindert. Entsprechende Geometrien sind dem Fachmann bekannt. So dauert es mindestens einige Sekunden, ggf. sogar mehrere Minuten, bis ein Druckausgleich zwischen zwei Gasvolumina mit je etwa 5 bis 50 ml hergestellt ist, die um ca. 2-5 bar differieren, wenn die Gasverbindung zwischen den Volumina einen Durchmesser von etwa 0,2 bis 0,4 mm besitzt, selbst wenn sie nicht einmal 1 bis 3 cm lang ist. In bestimmten Fällen kann die Gasverbindung sogar ausschließlich aus der Öffnung zwischen den beiden Gasvolumina bestehen, d.h. nur die Dicke der Wand zwischen den beiden Volumina besitzen, insbesondere, wenn der Gasdurchtritt durch zusätzlich Effekte wie die Oberflächenspannung einer Flüssigkeit verzögert wird, die so angeordnet ist, dass das Gas sie auf seinem Weg vom Gassack zu dem Gasreservoir passieren muss. Umgekehrt kann auch eine entsprechend lange Gasverbindung gewählt werden, um die Passage des Gases zu verzögern: Wenn sie z.B. mindestens ca 6 cm lang ist, kann sie einen Durchmesser von bis zu 1 mm aufweisen, wenn sie geeignet sein soll, den Gasaustritt aus einem etwa 5 bis 20 ml fassenden Gassack in geeigneter Weise zu verzögern. Unter "plötzlichem Druckabfall" im Sinne der vorliegenden Erfindung ist dagegen ein Druckabfall zu verstehen, der innerhalb von wenigen Milli- bis Zehntelsekunden erfolgt, also um mehrere Zehnerpotenzen schneller ist. Selbstverständlich werden die Länge und der Durchmesser der Gasverbindung anhand der Dimensionen der erfindungsgemäßen Vorrichtung vom Fachmann in geeigneter Weise ausgewählt und können dementsprechend stark variieren.

Die aufzuweitende Flüssigkeitsleitung wird zwischen dem Hebel und der Unterlage angeordnet und ggf. auch fixiert, wenn dies vorteilhaft ist. Dies kann beispielsweise dann angezeigt sein, wenn im Schlauchinneren keine Druckdifferenz zwischen dem Bereich vor und hinter der Engstelle vorhanden ist. Die Fixierung kann beispielsweise durch leichtes Verkleben, Siegeln oder Anschweißen am Hebel und der Unterlage erfolgen.

Die vorliegende Erfindung ist z.B. für die Anwendung in Druckräumen geeignet, vor allem dann, wenn diese keiner direkten mechanischen Manipulation zugänglich sind. In vorteilhafter Weise kann dabei in solchen Fällen, in denen der Druckraum plötzlichen Druckschwankungen ausgesetzt ist, ein Gaskompartiment im Druckraum selbst als das Gasreservoir benutzt werden, das mit dem Gassack in Verbindung steht. Als Beispiel für einen geeigneten Druckraum sei eine nicht vollständig mit Flüssigkeit gefüllte, unter Gasdruck stehende Dose, wie etwa eine Getränkedose, genannt.

In Einzelfällen kann die Vorrichtung auch in umgekehrter Weise arbeiten, also die Flüssigkeitsleitung durch plötzliches Zusammenfallenlassen des Gassacks zusammendrücken, wenn der Hebel eine entsprechende Vorspannung besitzt.

Nachstehend soll die erfindungsgemäße Vorrichtung anhand von Figuren näher erläutert werden, die eine spezielle Ausgestaltung der Erfindung zeigen.

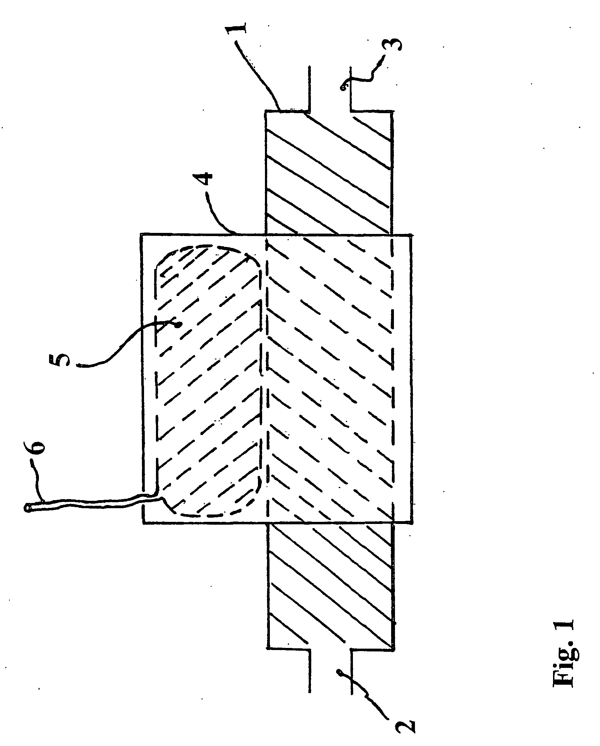

Figur 1 ist die Aufsicht auf eine erfindungsgemäße Vorrichtung. Man erkennt den Hebel 4, der in dieser Ausgestaltung relativ breit ist und ungefähr eine quadratische Fläche besitzt. Die Unterlage, die den Gegendruck ausübt, ist nicht gezeigt. Die Verbindung zwischen Hebel und Unterlage (die gleichzeitig den Drehpunkt bildet) ist mit 8 bezeichnet. Unterhalb des Hebels 4 (und damit zwischen dem Hebel und der nicht gezeigten Unterlage) befinden sich die Flüssigkeitsleitung 1 und der Gassack 5 (unter dem Hebel gestrichelt gezeichnet), wobei die Flüssigkeitsleitung näher zum Drehpunkt 8 hin angeordnet ist als der Gassack. Die Flüssigkeitsleitung weist einen Zulauf 2 und einen Ablauf 3 auf, deren Geometrie für die Zwecke der Erfindung bedeutungslos sind. Der Gassack 5 hat in dieser Ausgestaltung nach der Volumenvergrößerung eine etwa walzenförmige Gestalt. Die Gasverbindung 6 wird für die Aufweitung des Gassacks 5 mit einem hier nicht gezeigten Gasreservoir verbunden.

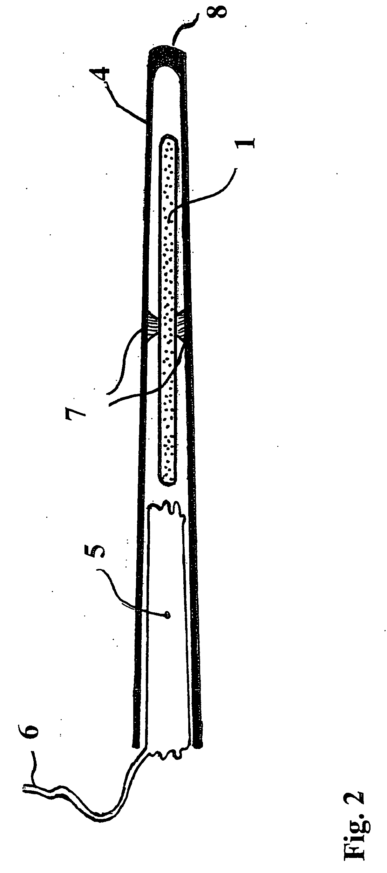

Figur 2 zeigt dieselbe Ausgestaltung der Erfindung von der Seite, und zwar vor der Aufweitung der Flüssigkeitsleitung 1. Diese liegt völlig zusammengefaltet oder -gedrückt zwischen dem Hebel 4 und der Unterlage 9, wobei durch Punkte innerhalb der Flüssigkeitsleitung 1 angedeutet ist, dass deren Wandober- und unterteil durch einen leichten Kleber oder andere Kräfte flüssigkeitsdicht miteinander verbunden sind. Bei 7 ist die Flüssigkeitsleitung mit dem Hebel 4 und der Unterlage 9 verklebt. Hebel und Unterlage sind identisch ausgestaltet; die Hebelwirkung wird demzufolge in dieser Ausgestaltung von beiden Teilen gleichermaßen ausgeübt, wie beispielsweise bei einer Zange. Der Drehpunkt 8 ist aus etwas dickerem Material realisiert als die beiden Hebelbestandteile 4 und 9, so dass die Aufweitung mittels Auseinanderdrücken der Hebelteile 4 und 9 bewirkt wird. Der Gassack 5 befindet sich in seinem "schlaffen" Ausgangszustand. Die Gasverbindung verbindet ihn mit einem nicht gezeigten Gasreservoir 10.

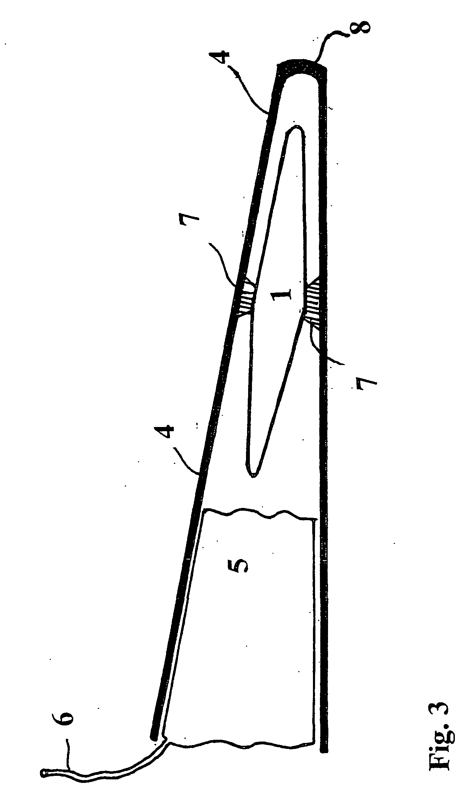

Figur 3 zeigt dieselbe Ansicht dieser Ausgestaltung bei sich aufblähendem Luftsack 5. Durch dessen Volumenvergrößerung werden die beiden Hebelarme 4 und 9 auseinandergedrückt; die mit dem Kleber 7 daran befestigte Wand der Flüssigkeitsleitung 1 wird auseinandergezogen, wodurch ein Raum geschaffen wird, durch das Flüssigkeit hindurchtreten kann.

## Patentansprüche

1. Vorrichtung zum Aufweiten des Querschnitts einer flexiblen Flüssigkeitsleitung mit einem einarmigen Hebel (4) und einem dehn- oder entfaltbaren Gassack (5), wobei der Hebel über seinem Drehpunkt (8) mit einer Unterlage (9) verbunden ist und der Gassack so zwischen dem Hebel und der Unterlage angeordnet ist, dass er bei zunehmendem Umfang als Kraft an dem Hebel angreift und dessen Winkel zur Unterlage vergrößert, und der Gassack weiterhin eine offene Gasverbindung (6) aufweist, die mit einem Gasreservoir verbunden werden kann und derart dimensioniert ist, dass das im Gassack enthaltene Gas bei einem plötzlichen Druckabfall im Gasreservoir und im den Gassack umgebenden Raum zu wesentlichen Anteilen im Gassack verbleibt und dessen Umfang vergrößert, wobei ein Bereich zwischen dem Hebel (4) und der Unterlage (9) vorgesehen ist, durch den die flexible Flüssigkeitsleitung hindurchgelegt und am Hebel und an der Unterlage fixiert werden kann.

2. Vorrichtung nach Anspruch 1, **dadurch gekennzeichnet, dass** die Unterlage (9) ein frei beweglicher Arm ist.

3. Vorrichtung nach Anspruch 1 oder 2, weiterhin umfassend die Flüssigkeitsleitung (1), deren Querschnitt aufgeweitet werden soll.

4. Vorrichtung nach Anspruch 3, **dadurch gekennzeichnet, dass** die Flüssigkeitsleitung (1) in dem Bereich, in dem sie sich zwischen dem Hebel (4) und der Unterlage (9) befindet, sowohl am Hebel als auch an der Unterlage befestigt, vorzugsweise angeklebt oder angeschweißt ist (7).

5. Vorrichtung nach Anspruch 3, **dadurch gekennzeichnet, dass** die Flüssigkeitsleitung durch eine Vorspannung zwischen dem Hebel (4) und der Unterlage (9) fixiert ist.

6. Vorrichtung nach einem der Ansprüche 3 bis 5, **dadurch gekennzeichnet, dass** die Wandung der Flüssigkeitsleitung (1) flüssigkeitsdicht, vorzugsweise auch gasdicht aufeinanderliegt.

7. Vorrichtung nach einem der Ansprüche 3 bis 6, **dadurch gekennzeichnet, dass** die Wandung der Flüssigkeitsleitung (1) in dem Bereich, in dem sie sich zwischen dem Hebel (4) und der Unterlage (9) befindet, auf ihrer Innenseite an ihrer Gegenseite haftet, vorzugsweise durch statische Aufladung, Adhäsion, Haftreibung oder eine leicht lösbare Verklebung oder Siegelung.

8. Vorrichtung nach einem der voranstehenden Ansprüche, **dadurch gekennzeichnet, dass** der Bereich (1), in dem die flexible Flüssigkeitsleitung zwischen dem Hebel (4) und der Unterlage (9) hindurchgelegt ist oder werden kann, näher am Drehpunkt (8) des Hebels liegt als der Ort, an dem sich der Gassack (5) befindet.

9. Verfahren zum Aufweiten des Querschnitts einer flexiblen Flüssigkeitsleitung, bei dem
- die Wandung der Flüssigkeitsleitung im aufzuweitenden Bereich zwischen einem einarmigen Hebel (4) und einer über dessen Drehpunkt (8) mit dem Hebel verbundenen Unterlage (9) einer Vorrichtung angeordnet wird, wobei die Vorrichtung weiterhin einen zwischen dem Hebel und der Unterlage angeordneten dehn- oder entfaltbaren, Gas enthaltenden Gassack (5) aufweist, der bei zunehmendem Umfang als Last an dem Hebel angreifen und dessen Winkel zur Unterlage vergrößern kann und über eine offene Gasverbindung (6) mit einem Gasreservoir (10) in Verbindung steht, wobei die Gasverbindung derart dimensioniert ist, dass das im Gassack enthaltene Gas bei einem plötzlichen Druckabfall im Gasreservoir und in dem den Gassack umgebenden Raum zu wesentlichen Anteilen nicht durch sie entweichen kann, und anschließend
- das Gasreservoir und der den Gassack umgebende Raum einem plötzlichen Druckabfall unterworfen werden, der eine Vergrößerung des Umfangs des Gassacks und damit eine Vergrößerung des Winkels zwischen Hebel und Unterlage und eine Aufweitung der Wandung der Flüssigkeitsleitung bewirkt.

## Claims

1. Device for expanding the cross-section of a flexible liquid pipe having a single-arm lever (4) and a gasbag (5) which can be extended or unfolded, wherein the lever is connected to a base (9) above its fulcrum (8) and the gasbag is arranged between the lever and the base so that for increasing circumference it contacts the lever as a force and its angle to the base increases, and the gasbag also has an open gas connection (6); which may be connected to a gas reservoir and has dimensions such that the gas present in the gasbag remains in the gasbag in considerable portions during a sudden pressure drop in the gas reservoir and in the space surrounding the gasbag and its circumference increases, wherein a region between the lever (4) and the base (9) is provided, through which the flexible liquid pipe is placed and may be fixed on the lever and on the base.

2. Device according to claim 1, **characterised in that** the base (9) is a freely moveable arm.

3. Device according to claim 1 or 2, also comprising the liquid pipe (1), the cross-section of which is to be expanded.

4. Device according to claim 3, **characterised in that** the liquid pipe (1) is attached, preferably adhered or welded (7) both to the lever and to the base in the region in which it is situated between the lever (4) and the base (9).

5. Device according to claim 3, **characterised in that** the liquid pipe is fixed by pretension between the lever (4) and the base (9).

6. Device according to one of claims 3 to 5, **characterised in that** the walls of the liquid pipe (1) lie one on another in liquid-tight, preferably also gas-tight manner.

7. Device according to one of claims 3 to 6, **characterised in that** the walls of the liquid pipe (1) adhere on their inner side at their opposite side, preferably by static charge, adhesion, static friction or easily releasable bonding or sealing, in the region in which they are situated between the lever (4) and the base (9).

8. Device according to one of the preceding claims, **characterised in that** the region (1), in which the flexible liquid pipe is or may be passed through between the lever (4) and the base (9), lies closer to the fulcrum (8) of the lever than the position at which the gasbag (5) is situated.

9. Process for expanding the cross-section of a flexible liquid pipe, in which
- the walls of the liquid pipe are arranged in the region to be expanded between a single-arm lever (4) and a base (9) of a device connected to the lever above its fulcrum (8), wherein the device also has a gasbag (5) containing gas which can be extended or unfolded and is arranged between the lever and the base, which gasbag (5) for increasing circumference may contact the lever as a load and its angle to the base may increase and is connected to a gas reservoir (10) via an open gas connection (6), wherein the gas connection has dimensions such that the gas present in the gasbag cannot escape in considerable portions through the gas connection during a sudden pressure drop in the gas reservoir and in the space surrounding the gasbag, and then
- the gas reservoir and the space surrounding the gasbag are subjected to a sudden pressure drop, which effects an increase in the circumference of the gasbag and hence an increase in the angle between lever and base and an expansion of the walls of the liquid pipe.

## Revendications

1. Dispositif pour élargir la section transversale d'une conduite de liquide souple avec un levier à un bras (4) et un coussin de gaz extensible ou déployable (5), dans lequel le levier est raccordé via son pivot (8) à une base (9) et le coussin de gaz est aménagé entre le levier et la base de sorte qu'il s'applique comme force sur le levier à mesure que son volume s'accroît et qu'il renforce son angle avec la base, et le coussin de gaz présente en outre un raccordement de gaz ouvert (6), qui peut être raccordé à un réservoir de gaz et est dimensionné de manière que le gaz confiné dans le coussin de gaz reste, lors d'une soudaine chute de pression dans le réservoir de gaz et dans l'espace entourant le coussin de gaz, pour la plus grande part dans le coussin de gaz et accroît son volume, en prévoyant une zone comprise entre le levier (4) et la base (9) à travers laquelle la conduite de liquide souple peut passer et être fixée sur le levier et sur la base.

2. Dispositif selon la revendication 1, **caractérisé en ce que** la base (9) est un bras librement mobile.

3. Dispositif selon la revendication 1 ou 2, comprenant en outre la conduite de liquide (1) dont la section transversale doit être élargie.

4. Dispositif selon la revendication 3, **caractérisée en ce que** la conduite de liquide (1) est fixée, de préférence collée ou soudée (7), dans la zone, dans laquelle elle se trouve entre le levier (4) et la base (9), autant sur le levier que sur la base.

5. Dispositif selon la revendication 3, **caractérisé en ce que** la conduite de liquide est fixée par une précontrainte entre le levier (4) et la base (9).

6. Dispositif selon l'une quelconque des revendications 3 à 5, **caractérisé en ce que** les parois de la conduite de liquide (1) sont appliquées l'une sur l'autre de manière étanche aux liquides, de préférence également étanche aux gaz.

7. Dispositif selon l'une quelconque des revendications 3 à 6, **caractérisé en ce que** la paroi de la conduite de liquide (1) adhère, dans la zone dans laquelle elle se trouve entre le levier (4) et la base (9), par sa face interne sur sa face opposée, de préférence par application d'électricité statique, adhérence, frottement statique ou par un collage ou un scellage aisément enlevable.

8. Dispositif selon l'une quelconque des revendications précédentes, **caractérisé en ce que** la zone (1), dans laquelle la conduite de liquide souple est ou peut être enfilée entre le levier (4) et la base (9), se situe plus près du pivot (8) du levier que l'endroit où se trouve le coussin de gaz (5).

9. Procédé pour élargir la section transversale d'une conduite de liquide souple, dans lequel :
- la paroi de la conduite de liquide dans la zone à élargir est agencée entre un levier à un bras (4) et une base (9) d'un dispositif raccordée au levier via son pivot (8), le dispositif présentant en outre un coussin de gaz (5) contenant du gaz, extensible ou déployable, agencé entre le levier et la base, qui peut, lorsque le volume s'accroît, s'appliquer comme charge sur le levier et renforcer son angle avec la base et est raccordé, via un raccordement de gaz ouvert (6), à un réservoir de gaz (10), le raccordement de gaz étant dimensionné de sorte que le gaz contenu dans le coussin de gaz ne puisse s'échapper en grandes quantités à travers le raccordement lors d'une soudaine chute de pression dans le réservoir de gaz et dans l'espace entourant le coussin de gaz, et ensuite
- le réservoir de gaz et l'espace entourant le coussin de gaz sont soumis à une chute soudaine de pression, qui provoque une augmentation du volume du coussin de gaz et, par suite, un renforcement de l'angle entre le levier et la base et un élargissement de la paroi de la conduite de liquide.
